Europäisches Patentamt

European Patent Office

Office européen des brevets

(19)

(11) Veröffentlichungsnummer : **0 414 722 B1**

(12) # EUROPÄISCHE PATENTSCHRIFT

(45) Veröffentlichungstag der Patentschrift :
21.11.91 Patentblatt 91/47

(51) Int. Cl.⁵ : **B60K 17/35**

(21) Anmeldenummer : 89904804.5

(22) Anmeldetag : 25.04.89

(86) Internationale Anmeldenummer :
PCT/EP89/00448

(87) Internationale Veröffentlichungsnummer :
WO 89/10279 02.11.89 Gazette 89/26

(54) **ALLRADGETRIEBENER ACKERSCHLEPPER.**

(30) Priorität : 30.04.88 DE 3814689

(43) Veröffentlichungstag der Anmeldung :
06.03.91 Patentblatt 91/10

(45) Bekanntmachung des Hinweises auf die
Patenterteilung :
21.11.91 Patentblatt 91/47

(84) Benannte Vertragsstaaten :
DE FR GB IT

(56) Entgegenhaltungen :
DE-A- 2 933 267
DE-A- 3 427 725
DE-A- 3 434 395
DE-A- 3 708 063
FR-A- 2 434 969

(73) Patentinhaber : ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder : HAUPT, Josef
Motharistrasse 5
W-7991 Oberteuringen (DE)
Erfinder : NIEZURAWSKI, Thomas
Kirschenweg 5
W-7990 Friedrichshafen 5 (DE)
Erfinder : GAZYAKAN, Ünal
Peoriastra e 32
Peoriastrasse 32 (DE)

## Beschreibung

Die Erfindung bezieht sich auf einen allradgetriebenen Ackerschlepper mit einem eine vordere und eine hintere Ausgangswelle aufweisenden Zahnräderwechselgetriebe, wobei die vordere Ausgangswelle an ein Vorderachsdifferential kuppelbar und über die hintere Ausgangswelle sowie einen eine Kupplung, eine Kegelritzelwelle und ein Tellerrad umfassenden Antriebsstrang ein Hinterachsdifferential antreibar ist.

Ein allradgetriebenes Kraftfahrzeug der vorgenannten Gattung ist aus der DE-C-29 33 267 bekannt. Das Zahnräderwechselgetriebe dieses Ackerschleppers weist eine Nachschaltgruppe mit einem Schnellgang für Transportgeschwindigkeit auf, in dem der Ackerschlepper generell mit Vorderradantrieb betrieben werden soll. Ein Zahnrad eines zwischen der Ausgangswelle und der Kegelritzelwelle angeordneten Vorgeleges ist im Geländebetrieb über eine formschlüssige Kupplung mit der Kegelritzelwelle verbunden. Gleichzeitig mit der Betätigung des Schnellganges wird diese formschlüssige Kupplung über ein Verbindungsgestänge ausgerückt. Günstige Traktionswerte lassen sich bei schweren Zugarbeiten des Ackerschleppers im Gelände nur mit permanentem Allradantrieb erzielen, wobei sich die starre Verbindung zwischen Vorder- und Hinterachse bei Kurvenfahrt des Ackerschleppers negativ auswirkt. Die Problematik besteht darin, daß die Vorderräder aufgrund der größeren Kurvenradien zur Aufrechterhaltung der Traktion schneller drehen müssen als die Hinterräder. Infolge der gleichen Achsdrehzahlen werden die Vorderräder bei Kurvenfahrt geschoben, so daß durch erhöhten Schlupf die Zugkraft des Ackerschleppers nicht ausgenutzt werden kann und außerdem starke Bodenverformungen sowie vergrößerte Wenderadien des Ackerschleppers auftreten.

Der Erfindung liegt daher die Aufgabe zugrunde, die vorgenannten Probleme zu vermeiden und folglich eine Einrichtung zu schaffen, die bei permanent eingeschaltetem Allradantrieb des Ackerschleppers Verspannungen zwischen Vorder- und Hinterachse bei Kurvenfahrt verhindert und die unter Verwendung baulich einfacher Mittel bei geringem Platzbedarf in den Ackerschlepper integrierbar ist.

Diese Aufgabe wird an einem allradgetriebenen Ackerschlepper der genannten Gattung nach dem kennzeichnenden Teil des Anspruchs 1 dadurch gelöst, daß die Kupplung zwischen dem Tellerrad und einem Differentialkorb des Hinterachsdifferentials angeordnet und als geregelte Schlupfkupplung ausgebildet ist, deren Schlupfzustand in Abhängigkeit von der Größe des mit dem Ackerschlepper zu durchfahrenden Spurkreishalbmessers und/oder des Zugkraftbedarfs geregelt wird. Es können dabei einer Zentraleinheit bestimmte Parameter als Steuergrößen zugeführt werden, die den Spurkreishalbmesser beeinflussen. Der jeweils im Antriebsstrang zur Hinterachse gesteuerte Schlupf läßt eine Verminderung der Hinterachsdrehzahl zu, so daß an der Vorderachse während der Kurvenfahrt die gute Traktion beibehalten bleibt. Da bei der Bodenbearbeitung beispielsweise mit Pflug oder Kreiselegge jeweils am Furchen- oder Ackerende auf engstem Raum gewendet werden muß, wobei das Anbaugerät nicht in den Boden eingreift, kann auch die Änderung des Zugkraftbedarfs als Parameter für den Schlupfzustand der Kupplung dienen. Wird erfindungsgemäß die Kupplung zwischen Tellerrad und Differentialkorb angeordnet, so kann einerseits aufgrund der radialen Abmessung der Kupplung ein großes Drehmomemt übertragen werden und andererseits setzt die Unterbringung der geregelten Schlupfkupplung keinerlei bauliche Veränderungen am Ackerschlepper voraus, da normalerweise im Hinterachsgehäuse ausreichend Raum für deren Unterbringung zur Verfügung steht. Das Zahnräderwechselgetriebe bleibt unverändert.

Aus der DE-A-34 27 725 ist es zwar bekannt, im Antriebsstrang einer Hinterachse eines Kraftfahrzeugs eine geregelte Rutschkupplung anzuordnen; es handelt sich aber um ein frontangetriebenes Automobil, bei dem der Schlupf der zusätzlich antreibbaren Räder der Hinterachse in einer steuerbaren festen Beziehung zum Schlupf der Räder der Vorderachse stehen sollen. Außerdem ist die geregelte Schlupfkupplung innerhalb der zur Hinterachse führenden Antriebswelle angeordnet.

Aus der DE-A-34 34 395 ist ebenfalls ein frontangetriebenes Automobil bekannt, bei dem eine im Verteilergetriebe angeordnete Kupplung in Abhängigkeit von einem Lenkwinkel der Lenkeinrichtung des Fahrzeugs bei gleichzeitiger Unterschreitung einer Grenzgeschwindigkeit ausgerückt werden soll. Die bekannte Anordnung der Kupplung im Verteilergetriebe vergrößert dessen bauliche Abmessungen in unerwünschter Weise. Landwirtschaftliche Ackerschlepper sind im Gegensatz dazu mit keinem separaten Verteilergetriebe versehen, sondern von einem Gruppenvorgelege oder einer Hauptwelle des Zahnräderwechselgetriebes aus erfolgt sowohl der Antrieb der vorderen als auch der hinteren Ausgangswelle.

Weitere vorteilhafte Ausgestaltungen der Erfindung sind in den Ansprüchen 2 bis 11 beschrieben.

Gemäß Anspruch 2 soll zur Regelung des Schlupfzustands der Kupplung der Lenkwinkel einer Lenkeinrichtung des Ackerschleppers dienen. Der jeweilige Lenkwinkel wird dabei mittels eines Sensors erfaßt und einer Zentraleinheit zugeführt. In Abhängigkeit vom Lenkwinkel kann eine starre Sollwert-Kurve des Schlupfzustands der Kupplung geregelt werden; es besteht aber auch die Möglichkeit, durch Eingriff in die Zentraleinheit mehrere variable Sollwert-Kurven des Schlupfzustands der Kupplung zu regeln.

Weiterhin kann dem Anspruch 3 zufolge als Eingangssignal zur Regelung des Schlupfzustands der Kupplung der Betätigungsdruck einer Einzelradbremse dienen. Wird demnach die Einzelradbremse zum Durchfahren enger Kurven eingesetzt, so soll ebenfalls die starre Verbindung zwischen Vorder- und Hinterachse durch die schlupfende Kupplung aufgehoben werden, so daß die Vorderräder des Ackerschleppers ohne zu schlupfen den engen Kurvenradius durchfahren können.

Es besteht gemäß Anspruch 4 die Möglichkeit, an einem allradgetriebenen Ackerschlepper mit einer, eine Lageregelung aufweisenden hydraulischen Dreipunkt-Hebevorrichtung die Verstellung der Kupplung in einen definierten Schlupfzustand aufgrund der Stellung "Heben" der Lageregelung herbeizuführen. Diese Programmsteuerung ist von besonderem Interesse bei der Anordnung von schweren Bodenbearbeitungsgeräten, wie z. B. Pflug, Kreiselegge oder Saatbeet-Kombinationen in der Dreipunkt-Hebeeinrichtung, mit denen am Furchenende bzw. am Ende des bearbeiteten Ackerstreifens auf engstem Raum gewendet werden muß. Da vor dem Wenden des Ackerschleppers die Lageregelung der Dreipunkt-Hebevorrichtung in ihre Stellung "Heben" verstellt wird, kann dieses Signal ebenfalls zur Verstellung der Kupplung verwendet werden.

Bei allen vorgenannten Möglichkeiten der Beeinflussung des Schlupfzustandes der Kupplung sollen nach dem Anspruch 5 am Tellerrad und am Differentialkorb Istwert-Aufnehmer angeordnet sein, die aufgrund der Drehzahldifferenz $\Delta n$ den jeweiligen Schlupfzustand der Kupplung erfassen.

In weiterer Ausgestaltung der Erfindung wird gemäß Anspruch 6 vorgeschlagen, die Kupplung als hydraulisch betätigte nasse Lamellenkupplung auszubilden, wobei ein sich vom Tellerrad her axial erstreckender Bund Außenlamellen und der Differentialkorb mittels Umfangsverzahnung Innenlamellen aufnehmen. Die entsprechend ausgebildete Kupplung ist in der Lage, ein großes Drehmoment zu übertragen, wobei sie weiterhin ohne Probleme in das Hinterachsgehäuse des Ackerschleppers integriert werden kann. Da sich die baulichen Abmessungen der aus dem Hinterachsdifferential und der Kupplung bestehenden Einheit kaum gegenüber denen eines normalen Hinterachsdifferentials vergrößern, können Ackerschlepper einer Baureihe unter Verwendung des gleichen Hinterachsgehäuses wahlweise mit oder ohne schlupfgeregelte Kupplung ausgerüstet werden.

Darüber hinaus kann nach Anspruch 7 die Kupplung, bezogen auf die Längsmittelachse der Kegelritzelwelle, dem Tellerrad gegenüberliegend angeordnet sein, während der Bund auf dem Differentialkorb drehbar gelagert ist. Auf diese Weise ist eine sehr weite Abstützung des Bundes ermöglicht, so daß die aus dem Antrieb des Tellerrades resultierenden Radialkräfte nicht auf die Kupplung übertragen werden. Zur Lagerung des Bundes am Umfang des Differentialkorbes können mehrere Gleit- oder Wälzlager dienen.

Gemäß Anspruch 8 wird vorgeschlagen, einen gehäusefesten am Umfang des Differentialkorbes gleitenden Ring vorzusehen, über den einem Betätigungszylinder der Kupplung Druckmittel und deren Innen- und Außenlamellen Schmiermittel zuleitbar ist.

Alternativ zu der Anordnung der Kupplung nach den Ansprüchen 6 bis 8 kann gemäß Anspruch 9 das Tellerrad am Umfang eines den Differentialkorb allseitig umschließenden Außenkorbes angeordnet sein, wobei der Außenkorb beidseitig über Kegelrollenlager im Hinterachsgehäuse gelagert ist und Außenlamellen der als hydraulisch betätigte nasse Lamellenkupplung ausgebildeten Kupplung sowie deren Betätigungseinrichtung aufnimmt. Auf diese Weise können die Verzahnungskräfte direkt über den Außenkorb in die Kegelrollenlager eingeleitet werden. Die Spieleinstellung des aus Kegelritzel und Tellerrad bestehenden Kegeltriebs kann somit in einfacher Weise an der Lagerung des Außenkorbes erfolgen. Die Lagerung des Differentialkorbes im Außenkorb ist theoretisch kräftefrei und kann als einfache Berührungslagerung mit Gleitlagern ausgeführt werden.

Weiterhin soll nach Anspruch 10 die Kupplung in einem Bereich des Außenkorbes angeordnet sein, der an eine einer Tellerradverzahnung gegenüberliegende Stirnseite des Tellerades anschließt. Auf diese Weise läßt sich die Kupplung platzmäßig sehr günstig im Hinterachsgehäuse unterbringen.

Schließlich soll gemäß Anspruch 11 die Kupplung zwischen einem etwa gleiche radiale Abmessungen wie das Tellerrad aufweisenden nabenartigen Abschnitt des Außenkorbes und dem Differentialkorb angeordnet sein. Dadurch können die Kupplungslamellen mit relativ großen Reibflächen ausgebildet werden, so daß ein großes Drehmoment mittels der Lamellenkupplung übertragbar ist und an den, während einer Kurvenfahrt schlupfenden, Lamellen eine zu starke Erwärmung vermieden wird.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der zwei Ausführungsbeispiele vereinfacht dargestellt sind. Es zeigen

Fig. 1 eine schematische Darstellung einer Antriebseinheit eines Ackerschleppers in der Draufsicht,

Fig. 2 eine erste Ausführung eines mit einer erfindungsgemäßen Schlupfkupplung versehenen Hinterachsdifferentials, im Längsschnitt, der dem Ausschnitt II der schematischen Darstellung nach Fig. 1 entspricht und

Fig. 3 eine zweite Ausführung eines Hinterachsdifferentials mit Schlupfkupplung als Längsschnitt, bei der ein Differentialkorb von einem Außenkorb umgeben ist.

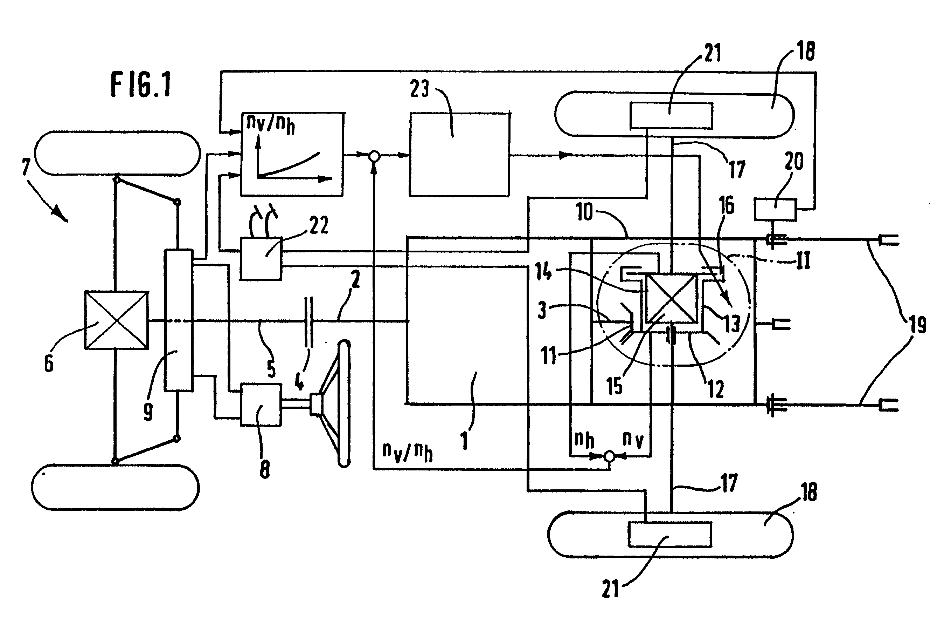

In der Fig. 1 ist ein Ackerschlepper schematisch dargestellt, der ein von einer in der Darstellung nicht aufgeführten Brennkraftmaschine angetriebenes Zahnräderwechselgetriebe 1 mit einer vorderen Ausgangswelle 2 und einer hinteren Ausgangswelle 3 aufweist. Mittels der vorderen Ausgangswelle 2 ist über eine Zuschaltkupplung 4 und eine Antriebswelle 5 sowie ein Vorderachsdifferential 6 eine lenkbare Vorderachse 7 antreibbar. Die Lenkeinrichtung der Vorderachse 7 besteht aus einem Lenkventil 8 und einer Stelleinrichtung 9.

Die hintere Ausgangswelle 3 des Zahnräderwechselgetriebes 1 ist in ihrer in ein Hinterachsgehäuse 10 geführten Verlängerung als Kegelritzelwelle 11 ausgebildet, die mit einem Tellerrad 12 im Eingriff steht. Das Tellerrad 12 weist einen sich axial erstreckenden Bund 13 auf und ist frei drehbar an einem Differentialkorb 14 eines Hinterachsdifferentials 15 gelagert. Dabei kann das Tellerrad 12 über den hülsenförmigen hund 13 unter Verwendung einer in ihrem Schlupf geregelten Kupplung 16 mit dem Differentialkorb 14 verbunden werden. Vom Hinterachsdifferential 15 aus werden über Steckachsen 17 Hinterräder 18 angetrieben.

Am Hinterachsgehäuse 10 ist weiterhin eine hydraulische Dreipunkt-Hebevorrichtung 19 zur Aufnahme von Anbaugeräten des Ackerschleppers angeordnet, die eine Lageregelungseinrichtung 20 zur Steuerung ihres Hubvorgangs aufweist. Die Hinterräder 18 des Ackerschleppers sind mit Radbremsen 21 versehen, die einzeln oder gemeinsam abbremsbar sind mittels einer Bremsbetätigungseinrichtung 22.

Weiterhin ist ein Regler 23 vorgesehen, dem ein Lenkwinkel der Lenkeinrichtung 8, 9, ein Bremsbetätigungsdruck der Bremsbetätigungseinrichtung 22 bei Einzelradbremsung sowie ein Signal der Lageregelung 20 zugeführt werden. Der Regler 23 regelt in Abhängigkeit dieser Eingangssignale den Schlupfzustand der Kupplung 16 $n_v/n_h$ ($n_v$ = Vorderachsdrehzahl; $n_h$ = Hinterachsdrehzahl).

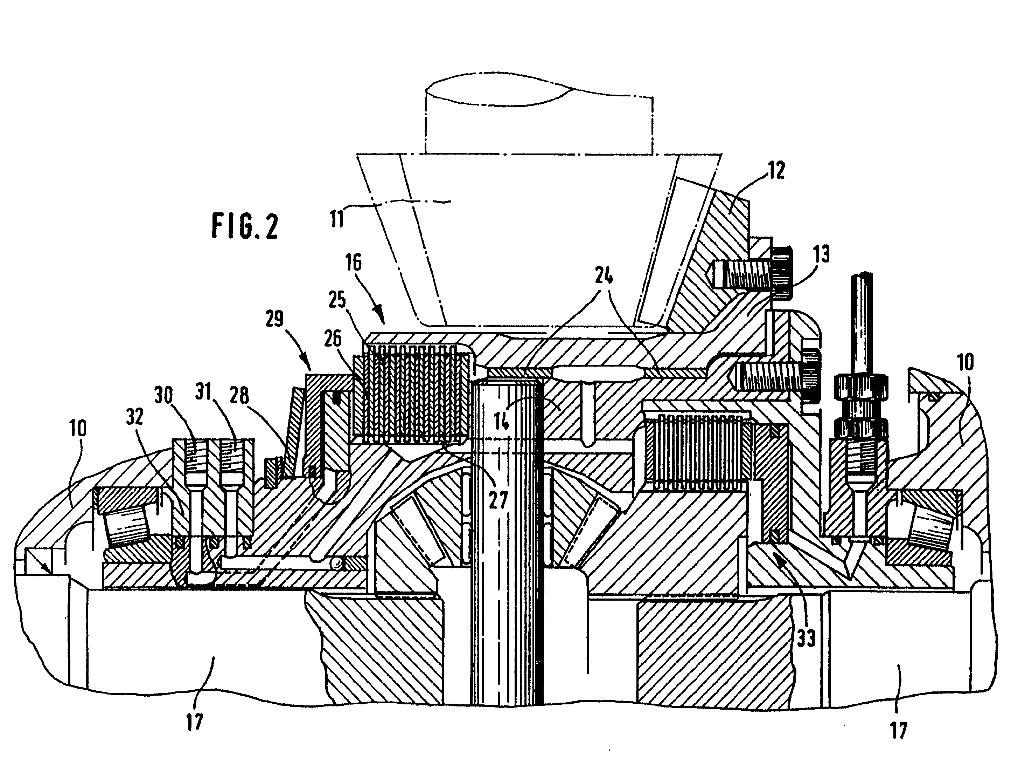

Der Fig. 2 ist im einzelnen die Anordnung der Kupplung 16 am Differentialkorb 14 zu entnehmen. Die Kegelritzelwelle 11 treibt das Tellerrad 12 an, an dem der hülsenartige Bund 13 befestigt ist. Dieser Bund 13 ist mittels zweier Gleitlager 24 auf dem Umfang des Differentialkorbes 14 frei drehbar gelagert. Die Kupplung 16 ist als nasse Lamellenkupplung ausgebildet, deren Außenlamellen 25 am Bund 13 und deren Innenlamellen 26 auf einer Verzahnung 27 am Umfang des Differentialkorbes 14 befestigt sind. Die Kupplung 16 ist über eine Tellerfeder 28 einrückbar und über einen Betätigungszylinder 29 in einen Schlupfzustand steuerbar. Zu diesem Zweck wird dem Betätigungszylinder 29 über einen Hydraulikanschluß 30 Druckmittel mit einem vom Regler 23 in Abhängigkeit der Parameter Lenkwinkel, Bremsdruck bei Einzelradbremsung und Aushubsteuerung der Lageregelung geregelten Druck zugeführt. Ein Schmiermittelanschluß 31 dient zur Versorgung der Innen- und Außenlamellen 25, 26 sowie der Gleitlager 24 mit Kühl- bzw. Schmieröl. Sowohl der Hydraulikanschluß 30 als auch der Schmiermittelanschluß 31 sind in einem am Umfang des Differentialkorbes 14 gleitenden und am Hinterachsgehäuse 10 festgelegten Ring 32 angeordnet. Im Bereich des Tellerrades 12 ist außerdem noch eine Differentialsperre 33 angeordnet, mittels welcher die über das Hinterachsdifferential 15 erzielbare Ausgleichswirkung der sperrbar ist.

Die Funktion der Einrichtung ist folgende:
Die Tellerfeder 28 sorgt dafür, daß über den Betätigungszylinder 29 die zum starren Durchtrieb zwischen Vorderachse 7 und Hinterachse (Steckachsen 17) nötige Axialkraft im drucklosen Zustand des Betätigungszylinders 29 übertragen wird. In diesem Zustand wird der Ackerschlepper bei Geradeausfahrt und über die Dreipunkt-Hebevorrichtung 19 abgesenktem Arbeitsgerät betrieben, so daß sich eine gute Traktion des Fahrzeugs ergibt. Hebt der Fahrer das Anbaugerät, z. B. Pflug, Kreiselegge oder Bodenbearbeitungskombination über die Dreipunkt-Hebevorrichtung 19 aus oder führt er eine Lenkbewegung über die Lenkeinrichtung 8, 9 bzw. mittels Einzelradbremsung über die Bremsbetätigungseinrichtung 22 aus, so werden diese Signale dem Regler 23 zugeführt, woraufhin dieser den Druck im Betätigungszylinder derart erhöht, daß sich ein definierter Schlupf zwischen den Außenlamellen 25 und den Innenlamellen 26 und folglich eine Drehzahldifferenz n zwischen Tellerrad 12 und Differentialkorb 14 ergibt. Dieser Schlupf gleicht dabei die aufgrund des Lenkvorgangs an der Vorderachse 7 auftretende Drehzahlerhöhung aus, indem die Drehzahldifferenz zwischen Vorder- und Hinterachse durch den Schlupf der Kupplung 16 kompensiert wird.

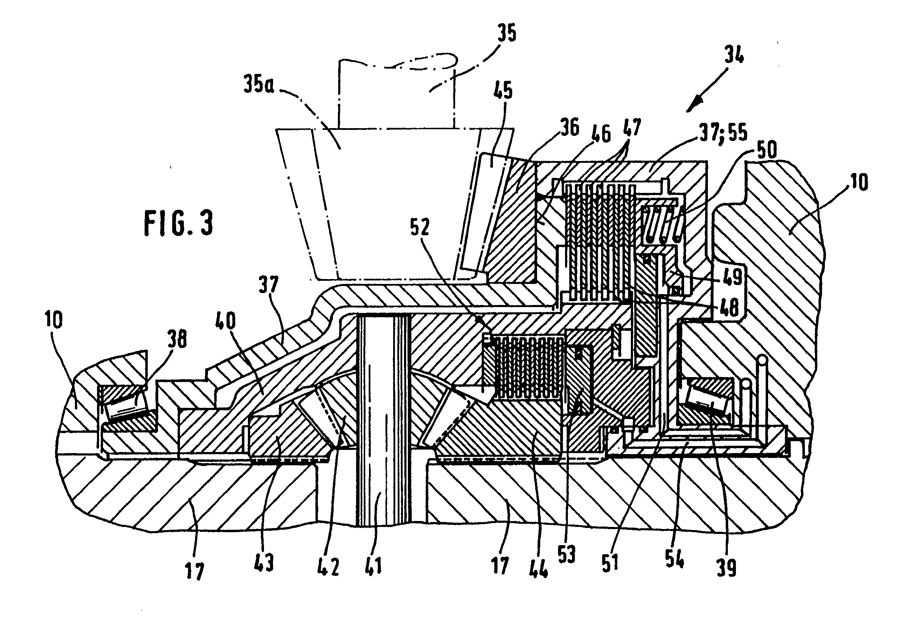

Der Fig. 3 sind nachfolgend im einzelnen erläuterte Bauelemente zu entnehmen, die an die Stelle der in Fig. 1, Ausschnitt II, sowie Fig. 2 dargestellten Elemente treten sollen. Im übrigen gelten die anhand der Fig. 1 beschriebenen Funktionen auch für die Ausgestaltung nach Fig. 3. Danach ist innerhalb des Hinterachsgehäuses 10 eine Kupplung 34 angeordnet. Eine Kegelritzelwelle 35, auf der ein Kegelritzel 35a angeordnet ist, treibt ein Tellerrad 36 an. Zwischen diesem Tellerrad 36 und einem Außenkorb 37 besteht eine drehfeste Verbindung, und der Außenkorb 37 ist über zwei Kegelrollenlager 38 und 39 im Hinterachsgehäuse 10 gelagert. Ein Differentialkorb 40 nimmt über Lagerbolzen 41 Ausgleichskegelräder 42 auf, die sich im Eingriff befinden mit einem linken Achskegelrad 43 und einem rechten Achskegelrad 44. Sowohl das linke als auch das rechte Achskegelrad 43 bzw. 44 sind drehfest verbunden mit den zu den Hinterrädern 18 führenden Steckachsen 17.

Das Tellerrad 36 ist an seiner einer Verzahnung 45 gegenüber liegenden Stirnseite 46 und an seinem inneren Umfang mit dem Außenkorb 37 verbunden. Die Kupplung 34 weist Außenlamellen 47 auf, die drehfest am Außenkorb geführt sind, während Innenlamellen 48 der Kupplung 34 am Differentialkorb 40 befestigt sind. Ein Betätigungskolben 49, der über eine Druckfeder 50 im Einrücksinn der Kupplung 34 belastbar ist, wird über eine Druckmittelbohrung 51 derart mit Druckmittel beaufschlagt, daß sein Axialdruck auf die Außen- und Innenlamellen 47, 48 reduziert wird und folglich eine Steuerung der Kupplung 34 in ihren Schlupfzustand erfolgt. Zwischen dem rechten Achskegelrad 44 und dem Differentialkorb 40 ist eine ebenfalls als Lamellenkupplung ausgebildete Differentialsperre 52 angeordnet, deren Betätigungskolben 53 über eine Druckmittelbohrung 54 druckbeaufschlagbar ist. Die Kupplung 34 befindet sich in einem nabenartigen Abschnitt 55 des Außenkorbes 37, dessen radiale Abmessung etwa der des Tellerades 36 entspricht.

Bezugszeichen

| 1 | Zahnräderwechselgetriebe | 34 | Kupplung |
|---|---|---|---|
| 2 | vordere Ausgangswelle | 35 | Kegelritzelwelle |
| 3 | hintere Ausgangswelle | 35a | Kegelritzel |
| 4 | Zuschaltkupplung | 36 | Tellerrad |
| 5 | Antriebswelle | 37 | Außenkorb |
| 6 | Vorderachsdifferential | 38 | Kegelrollenlager |
| 7 | Vorderachse | 39 | Kegelrollenlager |
| 8 | Lenkventil | 40 | Differentialkorb |
| 9 | Stelleinrichtung | 41 | Lagerbolzen |
| 10 | Hinterachsgehäuse | 42 | Ausgleichskegelräder |
| 11 | Kegelritzelwelle | 43 | linkes Achskegelrad |
| 12 | Tellerrad | 44 | rechtes Achskegelrad |
| 13 | Bund | 45 | Verzahnung des Tellerrades 36 |
| 14 | Differentialkorb | | |
| 15 | Hinterachsdifferential | 46 | Stirnseite von 36 |
| 16 | Kupplung | 47 | Außenlamellen von 34 |
| 17 | Steckachsen | 48 | Innenlamellen von 34 |
| 18 | Hinterräder | 49 | Betätigungskolben |
| 19 | Dreipunkt-Hebevorrichtung | 50 | Druckfeder |
| 20 | Lageregelungseinrichtung | 51 | Druckmittelbohrung |
| 21 | Radbremsen | 52 | Differentialsperre |
| 22 | Bremsbetätigungseinrichtung | 53 | Betätigungskolben |
| 23 | Regler | 54 | Druckmittelbohrung |
| 24 | Gleitlager | 55 | nabenartiger Abschnitt von 37 |
| 25 | Außenlamellen | | |
| 26 | Innenlamellen | | |
| 27 | Verzahnung | | |
| 28 | Tellerfeder | | |
| 29 | Betätigungszylinder | | |
| 30 | Hydraulikanschluß | | |
| 31 | Schmiermittelanschluß | | |
| 32 | Ring | | |
| 33 | Differentialsperre | | |

**Patentansprüche**

1. Allradgetriebener Ackerschlepper mit einem eine vordere (2) und eine hintere Ausgangswelle (3) aufweisenden Zahnräderwechselgetriebe (1), wobei die vordere Ausgangswelle (2) an ein Vorderachsdifferential (6) kuppelbar und über die hintere Ausgangswelle (3) sowie einen eine Kupplung (16, 34), eine Kegelritzelwelle (11) und ein Tellerrad (12, 36) umfassenden Antriebsstrang ein Hinterachsdifferential (15) antriebbar ist, dadurch **gekennzeichnet**, daß die Kupplung (16, 34) zwischen dem Tellerrad (12, 36) und einem Differentialkorb (14, 40) des Hinterachsdifferentials (15) angeordnet und als geregelte schlupfkupplung ausgebildet ist, deren schlupfzustand in Abhängigkeit von der Größe des mit dem Ackerschlepper zu durchfahrenden spurkreishalbmesser und/oder dessen Zugkraftbedarf geregelt wird.

2. Allradgetriebener Ackerschlepper nach Anspruch 1, dadurch **gekennzeichnet**, daß als Eingangssignal zur Regelung des Schlupfzustands der Kupplung (16, 34) ein Lenkwinkel einer Lenkeinrichtung (8, 9) des Ackerschleppers dient.

3. Allradgetriebener Ackerschlepper nach Anspruch 1, dadurch **gekennzeichnet**, daß als Eingangssignal zur Regelung des Schlupfzustandes der Kupplung (16, 34) ein Bremsbetätigungsdruck einer Einzelradbremse (21, 22) dient.

4. Allradgetriebener Ackerschlepper mit einer eine Lageregelungseinrichtung (20) aufweisenden hydraulischen Dreipunkt-Hebevorrichtung (19) nach Anspruch 1, dadurch **gekennzeichnet**, daß als Eingangssignal zur Verstellung der Kupplung (16, 34) in einen Schlupfzustand eine Stellung "Heben" der Lageregelungseinrichtung (20) dient.

5. Allradgetriebener Ackerschlepper nach Anspruch 1, dadurch **gekennzeichnet**, daß der Schlupfzustand der Kupplung (16, 34) aufgrund der Drehzahldifferenz $\Delta$ n zwischen Tellerrad (12, 36) und Differentialkorb (14, 40) mittels Meßwertaufnehmern erfaßbar ist.

6. Allradgetriebener Ackerschlepper nach Anspruch 1, dadurch **gekennzeichnet**, daß die Kupplung (16) als hydraulisch betätigte nasse Lamellenkupplung ausgebildet ist, wobei ein sich vom Tellerrad (12) her axial erstreckender Bund (13) Außenlamellen (25) und der Differentialkorb (14) mittels Umfangsverzahnung (27) Innenlamellen (26) aufnehmen.

7. Allradgetriebener Ackerschlepper nach Anspruch 6, dadurch **gekennzeichnet**, daß die Kupplung (16), bezogen auf die Längsmittelachse der Kegelritzelwelle (11) dem Tellerrad (12) gegenüberliegend angeordnet und der Bund (13) auf dem Differentialkorb (14) drehbar gelagert ist.

8. Allradgetriebener Ackerschlepper nach Anspruch 6, dadurch **gekennzeichnet**, daß ein gehäusefester am Umfang des Differentialkorbes (14) gleitender Ring (32) vorgesehen ist, über den einem Betätigungszylinder (29) der Kupplung (16) Druckmittel und deren Innen- und Außenlamellen (25, 26) schmiermittel zuleitbar ist.

9. Allradgetriebener Ackerschlepper nach Anspruch 1, dadurch **gekennzeichnet**, daß das Tellerrad (36) drehfest am Umfang eines den Differentialkorb (40) allseitig umschließenden Außenkorbes (37) angeordnet ist, wobei der Außenkorb (37) beidseitig über Kegelrollenlager (38, 39) im Hinterachsgehäuse (10) gelagert ist und Außenlamellen (47) der als hydraulisch betägte nasse Lamellenkupplung ausgebildeten Kupplung (34) sowie deren Betätigungseinrichtung (50) aufnimmt.

10. Allradgetriebener Ackerschlepper nach Anspruch 9, dadurch **gekennzeichnet**, daß die Kupplung (34) in einem Bereich des Außenkorbes (37) angeordnet ist, der an eine einer Tellerradverzahnung (45) gegenüberliegenden Stirnseite (46) des Tellerrades (36) anschließt.

11. Allradgetriebener Ackerschlepper nach Anspruch 10, dadurch **gekennzeichnet**, daß die Kupplung (34) zwischen einem etwa gleiche radiale Abmessungen wie das Tellerrad (36) aufweisenden nabenartigen Abschnitt (55) des Außenkorbes (37) und dem Differentialkorb (40) angeordnet ist.

## Claims

1. Four-wheel drive tractor with a gear change box having a front (2) and a rear output shaft (3), wherein the front output shaft (2) is couplable to a front axle differential (6) and a rear axle differential (15) is drivable via the rear output shaft (3) and via a drive strand having a clutch (16, 34), a bevel pinion shaft (11) and a ring gear (12, 36), characterised in that the clutch (16, 34) is mounted between the ring gear (12, 36) and a differential basket (14, 40) of the rear axle differential (15) and is formed as a controlled slip clutch, whose state of slip is controlled as a function of the size of the track circle radius to be driven through by the tractor and/or its traction power requirement.

2. Four-wheel drive tractor according to claim 1, characterised in that a steering angle of a steering device (8, 9) of the tractor acts as an input signal to control the state of slip of the clutch (16, 34).

3. Four-wheel drive tractor according to claim 1, characterised in that a single wheel brake (21, 22) acts as an input signal to control the state of slip of the clutch (16, 34).

4. Four-wheel drive tractor with a hydraulic three-point lifting device (19) having a position control device (20) according to claim 1, characterised in that a 'lift' position of the position control device (20) acts as an input signal for moving the clutch (16, 34) into a state of slip.

5. Four-wheel drive tractor according to claim 1, characterised in that the state of slip of the clutch (16, 34) is detectable by means of measurement receivers on the basis of the speed differential Δn between the ring gear (12, 36) and the differential basket (14, 40).

6. Four-wheel drive tractor according to claim 1, characterised in that the clutch (16) is formed as a hydraulically actuated fluid disc clutch, wherein a collar (13) extending axially from the ring gear (12) receives outer discs (25) and the differential basket (14) receives inner discs (26) by means of circumferential teeth (27).

7. Four-wheel drive tractor according to claim 6, characterised in that the clutch (16) is mounted opposite the ring gear (12) relative to the longitudinal central plane of the bevel pinion shaft (11) and the collar (13) is rotatably mounted on the differential basket (14).

8. Four-wheel drive tractor according to claim 6, characterised in that a ring (32) is provided, which is fixed to the housing and slides on the circumference of the differential basket (14) and via which pressure medium can be supplied to an actuating cylinder (29) of the clutch (16) and lubricant can be supplied to its inner and outer discs (25, 26).

9. Four-wheel drive tractor according to claim 1, characterised in that the ring gear (36) is mounted non-rotatably on the circumference of an outer basket (37) enclosing the differential basket (40) on all sides, in which case the outer basket (37) is mounted on both sides in the rear axle housing (10) via conical roller bearings (38, 39) and receives outer discs (47) of the clutch (34) formed as a hydraulically actuated fluid disc clutch and its actuating device (49, 50).

10. Four-wheel drive tractor according to claim 9, characterised in that the clutch (34) is mounted in a region of the outer basket (37) which abuts an end face (46) of the ring gear (36) opposite ring gear teeth (45).

11. Four-wheel drive tractor according to claim 10, characterised in that the clutch (34) is mounted between a section (55) of the outer basket (37) and the differential basket (40) having approximately the same radial dimensions as the ring gear (36).

## Revendications

1. Tracteur agricole à toutes roues motrices, pourvu d'une boîte de vitesses à engrenages (1) comportant un arbre de sortie avant (2) et un arbre de sortie arrière (3), et dans lequel l'arbre de sortie avant (2) peut être couplé à un différentiel d'essieu avant (6) et un différentiel d'essieu arrière (15) peut être entraîné par l'arbre de sortie arrière (3) et une ligne de transmission comprenant un embrayage (16, 34), un arbre à pignon conique (11) et une couronne de différentiel (12, 36), caractérisé en ce que l'embrayage (16, 34) se trouve entre la couronne (12, 36) et une cage (14, 40) du différentiel (15) de l'essieu arrière et est formé par un embrayage à glissement réglé, dont l'état de glissement est réglé en fonction de la valeur du rayon du cercle de braquage à parcourir par le tracteur et/ou de la demande de force de traction.

2. Tracteur selon la revendication 1, caractérisé en ce qu'un angle de braquage d'un dispositif de direction (8, 9) du tracteur sert de signal d'entrée pour le réglage de l'état de glissement de l'embrayage (16, 34).

3. Tracteur selon la revendication 1, caractérisé en ce qu'une pression de commande de freinage d'un frein individuel de roue (21, 22) sert de signal d'entrée pour la réglage de l'état de glissement de l'embrayage (16, 34).

4. Tracteur selon la revendication 1, pourvu d'un dispositif hydraulique de relevage à trois points (19) comportant un dispositif de réglage de position (20), caractérisé en ce qu'une position "relevage" du dispositif de réglage de position (20) sert de signal d'entrée pour mettre l'embrayage (16, 34) dans un état de glissement.

5. Tracteur selon la revendication 1, caractérisé en ce que l'état de glissement de l'embrayage (16, 34) est mesuré au moyen de capteurs sur la base de la différence de vitesse Δn entre la couronne (12, 36) et la cage (14, 40) du différentiel.

6. Tracteur selon la revendication 1, caractérisé en ce que l'embrayage (16) est formé par un embrayage multidisque humide à commande hydraulique, dans lequel un collet (13) s'étendant axialement à partir de la couronne (12) porte des disques extérieurs (25) et la cage de différentiel (14) porte des disques intérieurs (26) au moyen d'une denture périphérique (27).

7. Tracteur selon la revendication 6, caractérisé en ce que l'embrayage (16) est disposé du côté opposé à la couronne (12) par rapport à l'axe longitudinal de l'arbre à pignon conique (11) et ce que le collet (13) est monté de manière rotative sur la cage (14).

8. Tracteur selon la revendication 6, caractérisé en ce qu'une bague glissante (32) fixée au carter est prévue sur le pourtour de la cage (14) et est agencée pour transmettre un fluide de pression à un vérin de commande (29) de l'embrayage (16) ainsi qu'un lubrifiant aux disques intérieurs et extérieurs (25, 26) de l'embrayage.

9. Tracteur selon la revendication 1, caractérisé en ce que la couronne (36) est montée de manière solidaire en rotation sur la périphérie d'une cage extérieure (37), entourant de toutes parts la cage de différentiel (40), et en ce que la cage extérieure (37) est montée des deux côtés dans le carter d'essieu arrière (10) au moyen de paliers à rouleaux coniques (38, 39) et porte des disques extérieures (47) de l'embrayage (34) et les moyens d'actionnement (49, 50) de celui-ci, l'embrayage étant un embrayage multidisque humide à commande hydraulique.

10. Tracteur selon la revendication 9, caractérisé en ce que l'embrayage (34) est disposé dans une zone de la cage extérieure (37) qui est adjacente à une face frontale (46) de la couronne (36), à l'opposé de la denture (45) de celle-ci.

11. Tracteur selon la revendication 10, caractérisé en ce que l'embrayage (34) est disposé entre la cage de différentiel (40) et une section (55) en forme de moyeu de la cage extérieur (37), présentant une dimension radiale sensiblement égale à celle de la couronne (36).

EP 0 414 722 B1

FIG.1

$n_v/n_h$

$n_v/n_h$

$n_h$   $n_v$

FIG.2

EP 0 414 722 B1

FIG.3

EP 0 414 722 B1